# EUROPEAN PATENT SPECIFICATION

(11) **EP 3 218 156 B1**
(45) Date of publication and mention of the grant of the patent: **03.01.2024**
(21) Application number: 15801072.8
(22) Date of filing: 14.11.2015
(51) Int. Cl.: B29C 41/14, A41D 19/04, B29C 37/00, B29C 41/42

(54) **INTEGRATED ELASTOMERIC ARTICLE MANUFACTURING SYSTEM AND PROCESS**
INTEGRIERTE VORRICHTUNG ZUR HERSTELLUNG VON HANDSCHUHEN UND VERFAHREN
DISPOSITIF INTÉGRÉ DE FABRICATION DE GANTS ET PROCÉDÉ

(43) Date of publication of application: 20.09.2017
(73) Proprietor: Allegiance Corporation, Waukegan, IL 60085 (US)
(72) Inventor: WONG, Wei Cheong, Waukegan, IL 60085 (US); LIM, Jason, Waukegan, IL 60085 (US); YEOH, Tse-Liang, Waukegan, IL 60085 (US)
(74) Representative: Marks & Clerk LLP
(86) International application number: PCT/US2015/060760
(87) International publication number: WO 2016/077809

(56) References cited:
- GB-A- 2 232 919
- US-A- 3 570 053

## Description

### BACKGROUND

At present, the manufacture of certain elastomeric and polymer latex articles (such as surgical or examination gloves used in hospitals and other medical facilities, work gloves, prophylactics, catheters, balloons, etc.) typically involves two major processes, namely the on-line glove dipping or forming platform process (also known as the primary manufacturing process) and off-line processing (also known as the secondary manufacturing process).

In the dipping or forming platform process, for example, surgical gloves may be formed by one of two methods. One such method is a batch dip process, in which one or more molds (also referred to as formers) are dipped into one or more tanks containing liquid molding material (such as natural latex or synthetic polymers such as polyisoprene, nitrile rubber, vinyl, polyvinylchloride, polychloroprene, or polyurethane) or various other chemicals (such as coagulant). The second method is a continuous dip method, which is the most common, economical, and efficient method for high-volume glove manufacturing.

In a typical continuous dip process, such as that used in the manufacture of surgical gloves, a continuous loop conveyor chain carries the glove molds through the necessary cleaning, dipping, curing, and stripping processes. After a formed glove is stripped from a mold, the conveyor chain carries the mold back to the beginning of the cleaning process to begin a new cycle. Thus, the molds are utilized in a continuous cyclic manner. To increase efficiency, the conveyor chain moves continuously and at a constant speed throughout the continuous dipping process. Specialized equipment is required to conduct the various processes on the gloves as they are constantly traveling through the manufacturing facility. The initial stage of the dipping platform process typically includes the cleaning of the molds, as a clean mold surface is important for forming a quality glove. These clean molds are then carried by the conveyor chain through the coagulant dip process. As the molds continue to traverse laterally along with the conveyor chain, the molds are lowered into, and subsequently raised out of, a coagulant solution contained in an elongated dip tank. After the coagulant dip, the conveyor chain carries the coagulant-coated molds through a second tank containing the liquid molding material, such as latex. The coagulant coatings typically include salts that neutralize the surfactants in the liquid molding material emulsions, and which locally destabilize the liquid molding material, thus causing it to gel (or coalesce) and adhere as a film on the surface of the mold. The molds may be dipped in liquid molding material one or more times to achieve the desired glove thickness. The glove may then be dipped into a leaching tank containing circulating hot water to remove the water-soluble components, such as salts used in the coagulant solution or certain proteins present in the natural latex.

After the glove is formed, it undergoes a drying process in a drying oven to dry the thin gel layer prior to a high-temperature curing process to set and vulcanize the thin gelatinized film onto the mold surface. One or more additional layers, coatings or treatments may be formed or applied to the external surface of the formed glove, either before, after, or between drying and curing. For example, the external layer of the thin film, which typically becomes the user side (also known as the interior or donning side), may be coated with a donning composition or otherwise treated to make donning of the glove easier.

Typically, the final stage of the continuous dipping platform process is the stripping (i.e., removal) of the glove from its mold prior to the mold looping back to the mold cleaning process. Conventionally, the glove removal process is performed by a human operator manually stripping the gloves (with or without the aid of machines) or, in certain cases, using an automated stripping machine to strip the gloves from the molds. This process can result in significant waste if the gloves are not stripped properly. Molded gloves tend to adhere to the surface of the mold, such that the gloves must be gently peeled off of the mold. If they are pulled from the mold too quickly, with too much force, or if they are gripped such that too much stress is concentrated at the gripped points, the gloves can be punctured, torn, or otherwise compromised. Typically, because the cuff edge of the glove is peeled from the mold forst, and because the palm and finger areas of the glove adhere to the mold until they are peeled off, the glove becomes inverted or reversed as it is stripped from the mold such that the external surface of the glove after forming (i.e., the donning side) becomes the internal surface after stripping. However, as described below, the donning side typically requires off-line surface treatment after stripping, so the stripped gloves must be reversed or inverted after stripping to revert the donning side to the exterior surface. Manual and automated inverting processes typically employ suction or bursts of air to assist with fully inverting the glove.

Upon the completion of the on-line dipping process in the dipping platform, the thin film surgical gloves are typically still not finished products. After stripping from the molds, the gloves may undergo several steps of an off-line glove surface treatment process. For example, the gloves may be subjected to an off-line chlorination process, which may involve chlorination, lubrication, and tumble drying prior to inverting the glove such that the donning side becomes the interior surface before the gloves are packaged. These off-line processes often require several pieces of equipment (namely, chemical treatment equipment such as a chlorinator, etc.), an extractor, a tumbling machine, a dryer machine, and/or miscellaneous supporting equipment. Additionally, the off-line equipment is configured to process the gloves in batches, which requires that the formed gloves coming off of the dipping process line be temporarily stored in a queue, which consumes time and physical storage space, to wait for the batch processing equipment to become available, processes are substantial manual operation may also be necessary to operate these pieces of equipment, load and unload the gloves, transfer the gloves and complete these off-line processes prior to packaging the surgical gloves as finished products.

GB 2 232 919 A discloses an apparatus for stripping a rubber product from a mould including two opposite sucking mechanisms having two sucking members capable of sucking respectively at two opposite sides of the open end of the product to enable the two opposite sides to disengage from the mould surface.

US 3,570,053 A discloses a cuff folder mechanism operatively associated and travelling in timed relation with a stripping unit capable both of stripping a glove from a casting mold and retaining the same by gripping means.

### SUMMARY

Certain aspects of the present disclosure are directed toward systems, devices, and methods for stripping a formed thin film elastomeric article from a mold, inverting the article, transferring the article to a mandrel, and securing the inverted article to the mandrel for further on-line processing, thus integrating the dip forming process and the existing off-line surface treatment process into a single, continuous on-line manufacturing process (i.e., on-line dip forming, primary surface treatment, inverting, and secondary surface treatment process). This integration will greatly reduce the dependency on human operators to perform the above-noted tasks, reduce the process cycle time, eliminate the dependency of the off-line equipment/process, lead to space reduction and eliminate miscellaneous equipment handling and maintenance tasks. In certain aspects, the systems, devices, and methods of the present disclosure are suitable for manufacturing elastomeric gloves, such as latex or synthetic polymer medical exam gloves and surgical gloves. It will be appreciated that adaptation of the systems, devices, and methods to provide similar advantages in the manufacture of various other thin film elastomeric articles, such as prophylactics, catheters, balloons, work gloves etc., is well within the capabilities of ordinarily skilled artisans.

In one aspect, the present invention relates to a system comprising an online glove stripping and inverting mechanism for stripping and inverting an elastomeric glove (30) from a mold (20) and re-donning the elastomeric glove (30) on a second mechanism for secondary online processing;
wherein the online glove stripping and inverting mechanism comprises
a cuff rolling device (40) for rolling a portion of the cuff (32) of the glove distally away from a mold base (21) and toward the finger (38) and palm (36) areas of the elastomeric glove (30), thereby forming a rolled portion of the cuff and an exposed portion of a surface of the mold (22);
a gripping device having one or more gripping members (86, 88), the gripping device configured to engage the exposed portion of the surface of the mold (22); and,
a roll-back device for unrolling the rolled portion of the cuff proximally toward the mold base (21) and away from the elastomeric glove finger (38) and palm (36) areas thereby forming an unrolled cuff, the roll-back device configured to unroll the rolled portion of the cuff over and onto a portion of the one or more gripping members (86, 88) such that the one or more gripping members are interposed between the mold surface (22) and at least a portion of the unrolled cuff;
wherein the second mechanism comprises a glove donning device (100, 200, 300, 400, 500) comprising a mandrel.
The stripping apparatus can include a lifting device for lifting the gripping members away from the surface of the mold, thereby separating a portion of the glove cuff area from the mold surface. The stripping apparatus can include an actuation device for moving the gripping members distally away from the mold base to pull or peel the glove away from the mold surface. The actuation device may move the gripping members to a position distal of the finger area to fully remove the glove from the mold, and thereby at least partially invert the glove.

The system includes a glove donning device configured to receive the glove after it has been stripped from the mold. The system may be configured to move the gripping members of the stripping apparatus over or around a mandrel of the glove donning device to position the glove about one or more holding members of the mandrel, which holding members are configured to expand or separate to engage the interior surface of the inverted glove (i.e., the surface of the glove that was formed adjacent to the mold surface) to securely hold the glove on the mandrel of the glove donning device. The gripping members can be configured to release the gripped portion of the glove when the glove is positioned about the glove donning device. The glove donning device can be coupled to a continuous looped conveyor chain to carry the glove donning device (and the glove disposed thereon) through one or more on-line secondary processes. Accordingly, the system can strip the formed glove from the mold, invert the glove, and position and hold (i.e., mount) the glove on the glove donning device for subsequent on-line processing.

In certain aspects, the system is configured to move continuously and synchronize with the existing continuous dipping line speed to continuously strip, invert, and mount gloves formed by the dip forming process onto glove donning devices for subsequent on-line processing. In certain aspects, the gripping members are coupled to mechanical arms that are guided through translation, expansion, and contraction by one or more cam follower bearings. In certain aspects the glove donning device is expanded and contracted (i.e., opened and closed) by mechanical arms controlled by a cam follower bearing guided by a cam track to move the mechanical arms toward and away from each other.

Certain aspects of the present disclosure are directed toward a method of manufacturing elastomeric articles using the systems and devices of the present disclosure. In a further aspect, the present invention is directed to a method of manufacturing elastomeric articles comprising:
forming an elastomeric glove (30) on the surface of a glove mold (20);
stripping the formed elastomeric glove (30) from the surface of the mold (20),
wherein stripping the formed elastomeric glove from the surface of the mold includes:
   rolling down a portion of the cuff (32) of the elastomeric glove formed on a mold, thereby forming a rolled portion of the cuff and an exposed portion of the surface of the mold;
   positioning a gripping member (86, 88) on the exposed portion of the surface of the mold (22); and,
   unrolling the rolled portion of the cuff thereby forming an unrolled glove cuff, wherein the rolled portion of the cuff is unrolled onto the gripping member such that
   the gripping member is interposed between the mold surface (22) and at least a portion of the unrolled glove cuff;
   inverting the elastomeric glove (30);
   mounting the elastomeric glove (30) on a glove donning device (100, 200, 300, 400, 500) including a mandrel (110, 210, 410, 510);
   subjecting the elastomeric glove (30) to one or more secondary processes while the elastomeric glove (30) is mounted on the glove donning device (100, 200, 300, 400, 500).

The method can include lifting the gripping member away from the mold surface to separate a portion of the glove cuff from the mold surface, and moving the gripping member distally away from the mold base and beyond the finger area of the glove, thereby
peeling the glove away from the mold surface and at least partially inverting the formed glove.

In certain aspects, the method can include positioning the inverted glove about mandrel of the glove donning device one or more glove holding members of a glove donning device such that the surface of the glove that was formed adjacent to the mold surface becomes the exterior surface of the glove when it is positioned about the glove donning device. The method can include expanding the mandrel to engage the interior surface of the glove, thereby holding the glove securely on the glove donning device. The method can include releasing the gripped portion of the glove when the glove is positioned about the glove donning device such that the glove is fully mounted on the glove donning device. The method can include subjecting the glove to one or more secondary processes while the glove is mounted on the glove donning device.

### BRIEF DESCRIPTION OF THE FIGURES

Embodiments of the present disclosure are described by way of following drawings pointing out various details of the systems, devices and methods of the present disclosure. The main features and advantages of the present disclosure will be better understood with the following descriptions, claims, and drawings, where:

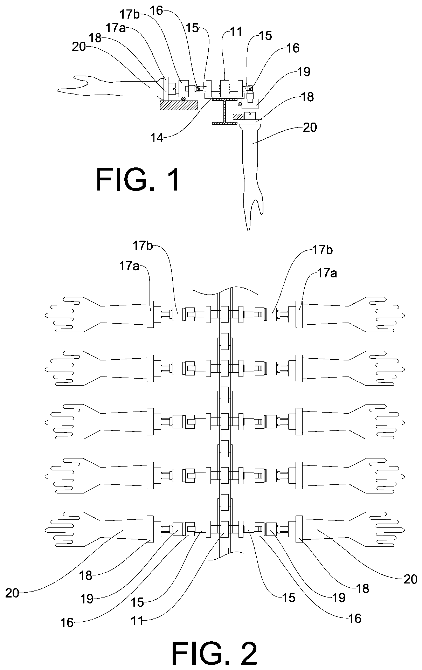

FIG. 1 is a top view

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details.

Various aspects of the systems and devices disclosed herein may be illustrated by describing components that are connected, coupled, attached, bonded and/or joined together. As used herein, the terms "connected", "coupled", "attached", "bonded" and/or "joined" are used interchangeably to indicate either a direct connection between two components or, where appropriate, an indirect connection to one another through intervening or intermediate components. Additionally, unless otherwise specified, these terms are used interchangeably to indicate a connection in which one or more degrees of freedom are not rigidly constrained between two components (e.g., a pivoting connection, a translating connection, a pivoting and translating connection, an elastic connection, a flexible connection, etc.), or a rigid or substantially rigid connection in which all degrees of freedom are constrained or substantially constrained between the two components.

Relative terms such as "lower" or "bottom", "upper" or "top", and "vertical" or "horizontal" may be used herein to describe one element's relationship to another element illustrated in the drawings. It will be understood that relative terms are intended to encompass different orientations of the systems and devices in addition to the orientation depicted in the drawings. By way of example, if aspects of a glove stripping, reversing, donning, and holding system as shown in the drawings are turned over, elements described as being on the "bottom" side of the other element would then be oriented on the "top" side of the other elements as shown in the relevant drawing. The term "bottom" can therefore encompass both an orientation of "bottom" and "top" depending on the particular orientation of the drawing.

Reference will now be made to figures wherein like structures are provided with like reference designations. It should be understood that the figures are diagrammatic and schematic representations of exemplary embodiments of the systems and methods of the present disclosure, and are neither limiting nor necessarily drawn to scale.

One exemplary embodiment of the glove stripping, reversing and wearing system of the present disclosure is implemented in conjunction with a continuous dip forming platform that includes a looped conveyor chain 11, as illustrated in FIGS. 1-2. The conveyor chain 11 is supported by roller bearings that run along a channeled bearing surface 14. One or more drive units, such as an electric motor and appropriate gearing, are coupled to one or more chain sprockets to drive the conveyor chain 11 through the continuous dipping process loop. Opposing pairs of mounting shafts 15 are coupled to the conveyor chain 11 at regular intervals and extend horizontally outwardly from the conveyor chain. A mold holding fixture 18 is coupled to the distal end of each shaft 15. Each mold holding fixture 18 includes a rotatable mold mount 19 for holding the molds 20 such that each mold may be selectively rotated about its longitudinal axis. As shown in FIG. 1, each mounting shaft 15 includes a pivot 16 so that the molds may be oriented horizontally or vertically (i.e., hung down from the mounting shaft), as desired, for example, to facilitate dipping. The mold mount 19 includes one or more bearing surfaces 17a, 17b (which may be rolling, sliding, etc.) and/or rotational guide surfaces, such as a "D" shaped collar (not shown), for guiding and maneuvering the mold 20 through the various processes along the dip forming line.

The conveyor chain 11 typically carries the molds 20 at a constant linear speed throughout the various stages of the dipping process. However, the preferred linear speed may be varied, for example, to adjust dipping or cure times, or otherwise process the gloves differently to accommodate various types of gloves, different forming materials, or varying thicknesses, or to achieve certain physical characteristics, etc. Suitable conveyor chain speeds typically may range from about 12 linear metres (40 linear feet) per minute to about 18 linear metres (60 linear feet) per minute.

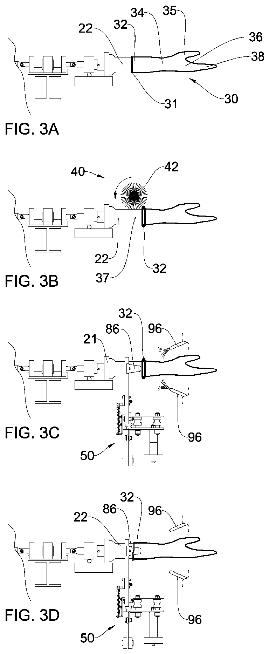

As illustrated in FIG. 3A, a thin film elastomeric glove 30 includes a cuff area 32, a wrist area 34, a thumb area 35, a palm area 36, and a finger area 38. Prior to the beginning of the glove stripping, reversing, and wearing process (which is also referred to as the transfer process) described in detail below, the glove 30 has been formed on the surface 22 of the mold 20 (which is also referred to as a former) by a suitable forming process, such as a continuous dipping line process, and the glove rests on the mold surface 22. The glove 30 may also have been subjected to one or more post-forming processes along the continuous dipping line. It should be understood that any process may be used to coat or treat the external layer of the thin film to form the donning layer, such as dipping, spraying, immersion, vapor deposition, printing, or any other suitable technique. Alternatively, the donning layer can be formed off-line by similar techniques apparent to those of ordinary skill in the art.

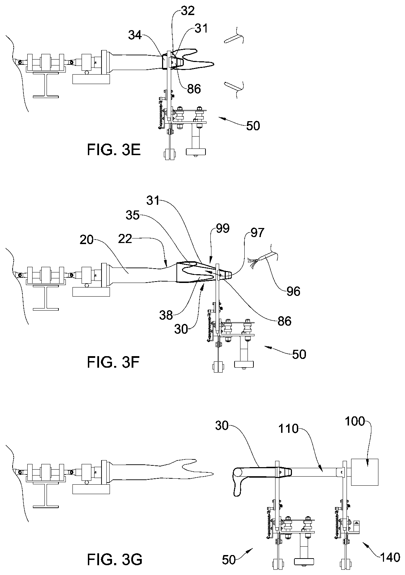

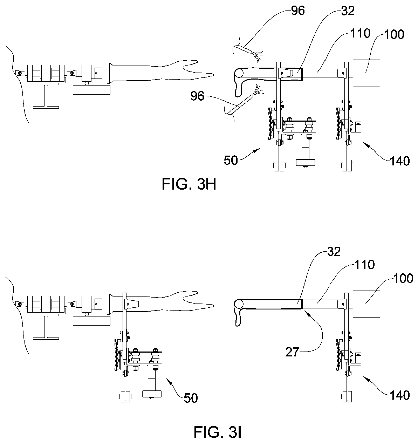

The following description is intended to provide an overview of the transfer process, however, one exemplary embodiment of the transfer process will be described with greater detail in conjunction with the below description of the exemplary embodiments of the systems and devices provided to accomplish the transfer process. Referring to FIGS. 3-4, the transfer process generally involves gripping the cuff portion of the glove and pulling or peeling the glove away from the mold surface by pulling the cuff portion toward, and then distally of, the finger area. Adhesion of the glove to the mold surface causes the glove to invert (i.e., turn inside-out) as the glove is peeled from the mold. The gripped cuff area is pulled over a cantilevered end of a donning device mandrel positioned distally of the mold such that the inverted glove surrounds a portion of the mandrel (i.e., the donning device mandrel "wears" the glove). When the glove has been fully released from the mold surface and is positioned about the mandrel, the device expands or separates to engage the interior surface of the inverted glove and securely hold the glove in place on the donning device mandrel. The gripped cuff area is then forced away from the grippers by an external force (such as a burst of air or jet of water) or otherwise released from the grippers so that the inverted glove is fully held or worn on the donning device mandrel. The donning device is coupled to a second conveyor chain that carries the glove through secondary processes as it is securely held on the donning device.

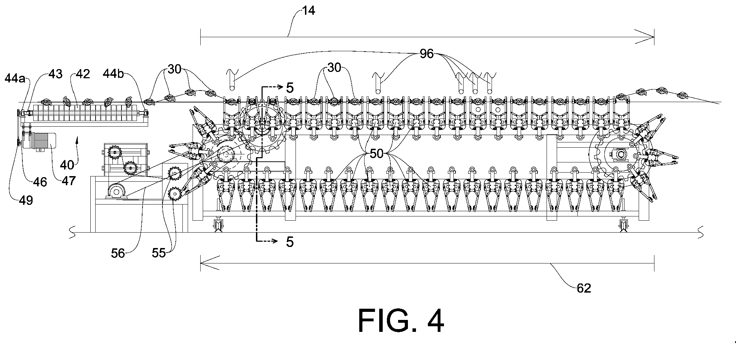

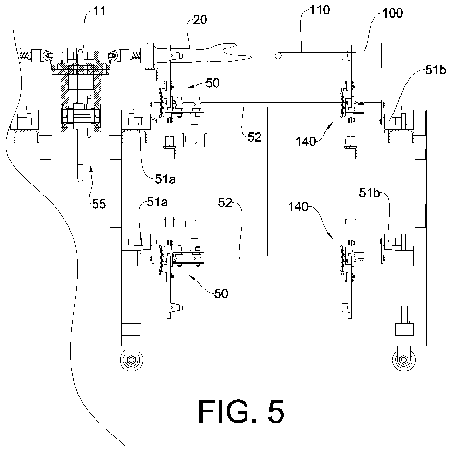

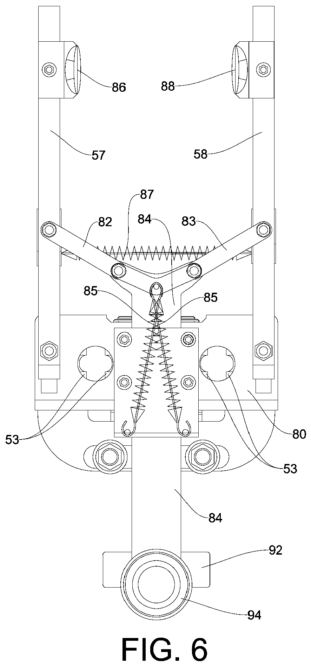

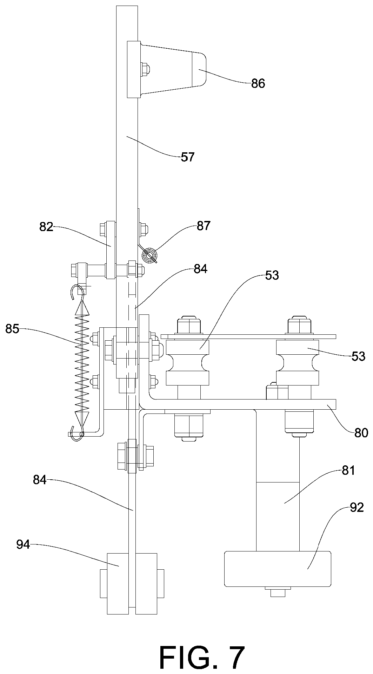

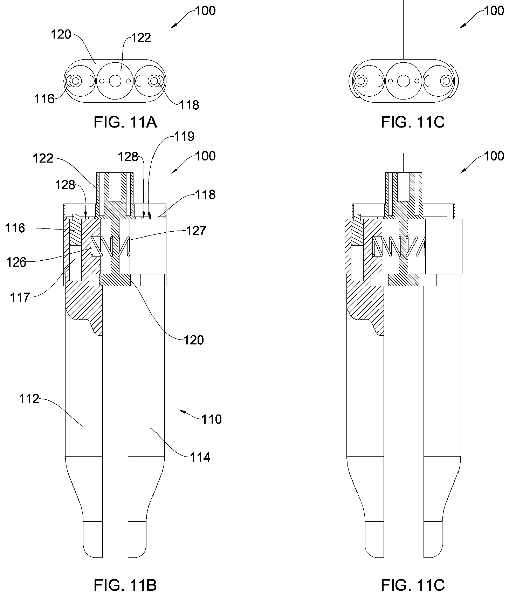

FIGS. 1-13 illustrate exemplary embodiments of the various devices that may be implemented to accomplish the transfer process described above. These devices include a cuff roll-down device 40 as illustrated in FIG4. 4, a gripping, lifting, and pulling apparatus (i.e., a glove stripping device 40), as illustrated in FIGS. 6-7, and a glove receiving and holding device (i.e., a glove donning device 100), as illustrated in FIG. 11.

To initiate the transfer process, the cuff edge 31, which is typically beaded, is rolled down toward the wrist area 34 by a cuff roll down device 40, such as the one illustrated in FIG. 4. In this embodiment, the cuff roll-down device 40 includes a cylindrical brush 42 coupled to a rotary shaft 43, which is supported at opposite ends by rotary bearings 44a, 44b. A drive shaft 46 of an electric motor 47 is coupled to the rotary shaft 43 by a drive belt 49 to rotate the brush 42. The motor 47 drives the cylindrical brush 42 to rotate about an axis parallel to the direction of travel of the conveyor chain 11. As each mold 30 traverses down the length of the brush 42, it is rotated about its longitudinal axis such that each portion of the glove cuff edge 31 engages with the brush bristles 41, which cause the cuff edge 42 to roll down toward the wrist area 34 of the glove 30. As the cuff area 32 is rolled down, a portion 37 of the cuff area of the mold surface 22 is exposed. Although a cylindrical brush is illustrated in this embodiment, it will be appreciated by ordinarily skilled artisans that the cuff area ## may be rolled, folded, lifted, or otherwise forced away from the mold surface by any suitable mechanism, such as by forced air or water, or by a solid or foam surface roller. In certain embodiments, separate cuff rolling devices may be configured to roll the cuff down while the cuff rolling devices move along a separate continuous loop (in a similar manner as described below with respect to the glove stripping devices), to synchronize with the motion of the glove molds as the device rolls down the cuff edge.

After the cuff edge 31 is rolled down, the mold 20 and glove 30 enter a transfer path 14 of the transfer system 10, as shown in FIG. 4. As illustrated in FIG. 4, the transfer system 10 includes a plurality of glove stripping devices 50 each of which is slidably coupled to a pair of linear guide rails 52 that are connected at opposite ends to a pair of transfer system conveyor chains 51a, 51b. Additionally, an actuation device 140 is coupled to each pair of linear guide rails 52 and serves to compress the glove donning device mandrel arms 72, 73 prior to receiving the inverted glove 30. The transfer system conveyor chains 51a, 51b are synchronized with gears and/or sprockets 55 and chains 56 to move the glove stripping devices 50 along the transfer path 14 in synchronization with the molds 20 travelling along a portion of the main dipping line path 64. After the glove stripping devices 50 have passed through the transfer path 14, the transfer system conveyor chains 51a, 51b carry them along a return path 62 and back to the beginning of the transfer path 14.

Upon entering the transfer path 14, the glove mold 20 is lowered between a pair of opposing mechanical arms 57, 58 of the glove stripping device 50, as illustrated in FIG. 4. The glove stripping device 50 includes a carriage body 80 to which the lower ends of the mechanical arms 57, 58 are pivotably coupled. Links 82, 83 are pivotably coupled to central portions of the arms 57, 58, and to an upper end of a push rod 84. The push rod 84 is slidably coupled to the carriage body 80 such that the push rod 84 may translate vertically up and down. As the push rod is raised from a lower to an upper position, the links 82, 83 pivot and push the mechanical arms away from each other to an open state as shown in FIG. 6. Tension springs 85 are coupled to the push rod 84 and the carriage body 80 so as to bias the push rod 84 downward. An additional tension spring 87 is coupled to central portions of the mechanical arms 57, 58 so as to bias the arms toward each other (i.e., toward a closed position) to form a better grip with the bare mold and to accommodate different sizes of molds (such as different molds that are used to used to form different sized gloves).

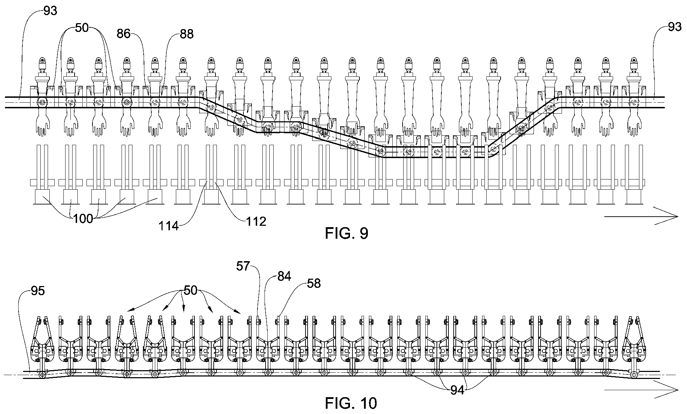

The carriage body 80 of the glove stripping device 50 is slidably mounted to a pair of the linear guide rails 52 via linear guide rail bearings 53. A horizontal cam follower bearing 92 is coupled to a rod 81 extending below the carriage body 80 The horizontal cam follower bearing 92 is configured to roll along a horizontal cam track 93 extending along the transfer path 14. The horizontal cam track 93 is profiled, as illustrated in FIG. 9, to cause the glove stripping device 50 to translate along the linear guide rails 52 from a position proximal to the glove mold base 21 to a position distal of the glove mold finger area 38 during the transfer process. The glove stripping device 50 also includes a vertical cam follower bearing 94 coupled to a lower end ## of the push rod 84. During the transfer process, the vertical cam follower bearing 94 rolls along a vertical cam track 95 extending along the transfer path 14. As illustrated in FIG. 10, the cam track 95 is profiled to raise and lower the cam follower bearing 94 and the push rod 84 thus opening and closing the mechanical arms 57, 58 as the glove stripping device 50 travels along the transfer path 14.

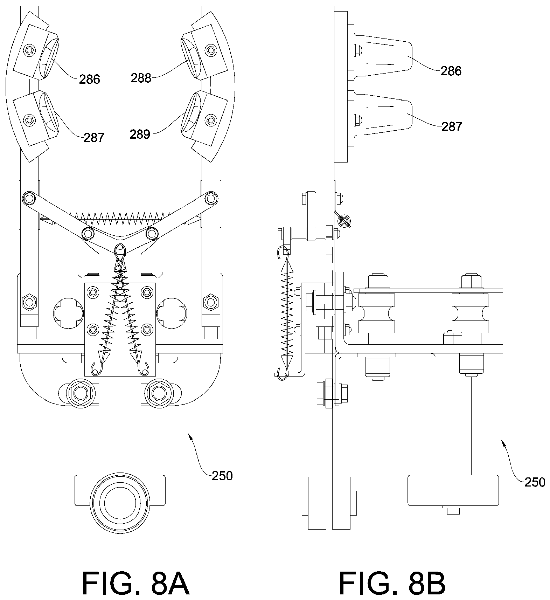

Before the glove mold 20 is lowered between the mechanical arms 57, 58, the vertical cam track profile causes the push rod 84 to rise upward, which increases tension in the springs , 85, 87, and causes the mechanical arms 57, 58 to move to an open position as shown in FIG. 10. After the glove mold is positioned between the mechanical arms 57, 58 at the beginning of the transfer path 14, the vertical cam track profile is lowered, thus allowing the springs , 85, 87 to pull the mechanical arms 57, 58 together until the gripping members 86, 88 rest on the portion of the mold surface that was exposed when the cuff edge 31 was rolled down (i.e., the surface of the mold where the rolled cuff portion of the glove originally rested). Although FIGS. 6-7 illustrate one gripping member coupled to each of the mechanical arms ordinarily skilled artisans will appreciate that any number of gripping members may be used in any suitable configuration to facilitate gripping, lifting, and removal of the glove from the mold surface. For example, FIGS 8A-B. ## illiustrate an embodiment that includes two gripping members coupled to each arm 57, 58. Similarly, although the glove stripping device 50 of the present embodiment is illustrated with two mechanical arms, it will be appreciated that any number of arms may be used in any suitable configuration. The gripping members may be formed of any suitable material known in the art. In an exemplary embodiment, the grippers may be formed of a rubber or plastic material to conform to the surface of the mold and to more easily grip the material of the glove. Ridges or other suitable contours may be formed on the glove engaging surface of the gripping members to assist in preventing the glove from slipping off of the gripping members.

When the gripping members 86, 88 are positioned against the mold 20, as shown in FIGS 3C, the rolled portion 32 of the thin film glove is unrolled, pushed or otherwise urged back proximally toward the mold base 21 by a force (for example, by means of one or more pressurized air nozzles 96 or water jets). The force used to unroll the rolled cuff portion 32 causes the cuff 32 to lay over the gripping members 86, 88 such that at least a portion of the gripping members 86, 88 is interposed between the unrolled cuff portion 32 and the mold surface 22, as illustrated in FIG. 3D.

The air nozzles 96 or waterjets may be mounted on stationary equipment above and/or below the transfer path 14 in suitable proximity and orientation to direct a burst of air or jet of water toward the rolled cuff edge 31 as it passes by. The air nozzles or waterjets may be connected by tubing or hoses to a source, for example an air compressor and reservoir tank positioned near the transfer system or a central pressurized air supply line system. Air or water may be continuously dispened, or more preferably is controlled by mechanical or solenoid valves or other suitable fluid control devices to deliver intermittent bursts sufficient to roll back the cuffs. The timing of the bursts may be synchronized or controlled by various known devices and methods. For example, timing may be controlled with the aid of electronic sensors (such as optical, magnetic, or sonic sensors), or by a mechanical switch that is triggered by mechanical contact with a portion of each passing mold (or other moving equipment associated with each glove). In certain embodiments, a brush or solid surface cylindrical roller may also be used in lieu of, or in addition to, an air nozzle, water jet, etc.

After the cuff 32 has been rolled back and is laying over the gripping members 86, 88, the gripping members are moved to an open position (by raising the push rod 84 via the vertical cam track profile 95) to expand (i.e., separate) the gripping members 86, 88 and thereby lift the glove cuff area 32 away from the mold surface 22. After the gripping members 86, 88 are lifted from the mold surface 22, the horizontal cam track 93 causes the glove stripping device 50 (and thus the gripping members 86, 88) to translate distally toward the finger area 38 of the glove 30, thereby pulling or peeling the glove off of, and away from, the mold surface 22 as illustrated in FIG. 3E.

One or more bursts of air or waterjets may be directed at the glove to help urge the glove film away from the mold surface. In the exemplary embodiment illustrated in FIG. 3F, a burst of air is directed into a pocket 97 formed generally between the portion 99 of the glove that has been peeled off of the mold 20 and the portion of the glove that remains on the mold surface 22. The temporarily increased air pressure inside the pocket 97 causes the peeled off portion 99 to balloon radially outward from the mold surface 22, thus momentarily increasing the radially outward component of tensile force acting at the peel seam 9 to help release the thumb area 35 and palm area 36 from the mold surface 22.

As the gripping members 86, 88 move distally beyond the finger area 38 of the mold 20 (as illustrated in FIG. 3F), the distal portions of the glove 30 initially remain adhered to the mold surface 22, thus causing the glove to become inverted as the cuff edge 31 is pulled distally of the finger area 38. The gripping members 86, 88 pull the glove 30 onto a mandrel 110 of the glove donning device 100, as shown in FIG. 3G. When the gripping members 86, 88 reach a predetermined position, the glove donning device 100 expands or separates portions of the mandrel 110 to tension to the glove to hold it firmly on the mandrel 110. The glove cuff 32 is then released from the gripping members 86, 88, for example, by a burst of air directed into the pocket 109 generally formed between the gripped portion 39 of the glove cuff 32 and the exterior surface of the portion of the glove held by the mandrel 110, such that the inverted glove 30 is fully mounted on the glove donning device 100. Optionally, another burst of air may be directed into the interior of the inverted glove (e.g., through the cuff opening 27 between the mandrel arms 57, 58, or through a channel routed through the interior of the mandrel arms to an exit port positioned at a distal portion of the mandrel arms) to temporarily inflate the inverted glove to ensure that it is fully inverted when mounted on the glove donning device.

The glove donning device 100 of this exemplary embodiment includes a base 120 having a mounting portion 122 at a proximal end, and a mandrel portion 110 comprising two mandrel arms 112, 114 extending distally from the base 120 along a longitudinal axis of the glove donning device 100, as illustrated in FIGS. 11A-D. The mandrel arms 112, 114 are slidably coupled to the base 120 such that the arms can move toward and away from each other in a horizontal plane. In other words, the mandrel portion 110 can expand and retract in a horizontal direction transverse to the longitudinal axis of the mandrel 100 by sliding the mandrel arms 112, 114 away from each other and toward each other, respectively. The mandrel arms 112, 114 are retained in the base by retention pins 116, 118 inserted into bores 117, 119 in the proximal surfaces 121, 123 of the arms 112, 114. The retention pin heads 116, 118 are slidably disposed in pin slots 124, 125 provided at the proximal end of the base 120. Springs 126, 127 are disposed between opposing interior-facing surfaces 128, 129 of the mandrel arms 112, 114 and opposite sides of an interior central wall 115 of the base 120. The springs 126, 127 are normally compressed to bias the mandrel arms 112, 114 toward a fully expanded state, as shown in FIGS. 11C-D . The glove donning device 100 is coupled via a holding device 113 (e.g., a device similar to the mold holders) to a secondary conveyor chain, which carries it (and other glove donning devices 100) and the inverted glove 30 received thereon through one or more on-line secondary processes.

Near the beginning of the transfer path, the glove donning device 100 (in the expanded state) is lowered between a pair of mechanical actuation arms 142, 144 of an actuation device 140. The actuation arms 142, 144 are pulled toward each other to push or compress the mandrel arms 112, 114 toward each other to a retracted state. When the actuation arms 142, 144 are separated, the springs 126, 127 of the glove donning device 100 force the mandrel arms 112, 114 away from each other, thus returning the mandrel arms to the expanded state. Similar to the glove stripping device 50, the actuation device 140 includes a carriage body 180 to which the lower ends of the actuation arms 142, 144 are pivotably coupled. Links 182, 183 are pivotally coupled to central portions of the arms 142, 144 and to an upper end of a push rod 184. The push rod 184 is slidably coupled to the carriage body 180 such that the push rod 184 may translate vertically up and down. As the push rod 184 is lowered from a raised or closed state, the links 182, 183 pivot and pull the mechanical arms toward each other to a closed position as shown in FIG. 10. The actuation device 140 also includes a vertical cam follower bearing 194 coupled to a lower end of the push rod 184. During the transfer process, the vertical cam follower bearing 194 rolls along a cam track 195 extending along the transfer path 14. As illustrated in FIG. 10, the cam track 195 is profiled so as to raise and lower the cam follower bearing 194 and the push rod 184, and therefore open and close the actuation arms 142, 144, as the actuation device travels along the transfer path 14.

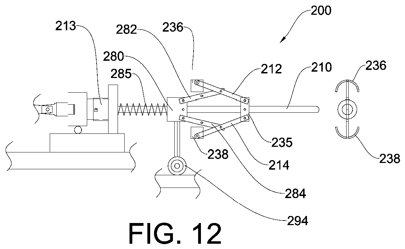

An alternative embodiment of the glove donning device is illustrated in FIG. 12. In this embodiment, the glove donning device 200 includes a mandrel shaft 210 extending from the holding device 213 to a distal end 219, a shaft collar 235 is rigidly coupled to a middle portion of the mandrel shaft. Mechanical arms 212, 214 are pivotably coupled at one end to the shaft collar 235 and at another end to arcuate cowl segments 236, 237. Links 282, 284 are pivotably coupled to middle portions of the arms 212, 214 and to a carriage 280 slidably coupled to the shaft 210 proximally of the shaft collar 235. As the carriage 280 is translated along the shaft 210 toward the shaft collar 235, the links 282, 284 pivot and push the mechanical arms 212, 214, 216 radially outward from the shaft to an expanded position wherein the cowl segments 236, 237 may engage the interior surface of an inverted glove. Conversely, as the carriage 280 is moved proximally, the mechanical arms retract radially inward toward the shaft 210 to a retracted position. A coil spring 285, retained about the shaft 210 between the carriage 280 and the holding device 213, is normally compressed so as to urge the carriage 280 distally to the expanded position. A cam follower bearing 294 and cam surface (not shown) serve to control movement of the carriage and thus the mechanical arms between expanded and retracted positions.

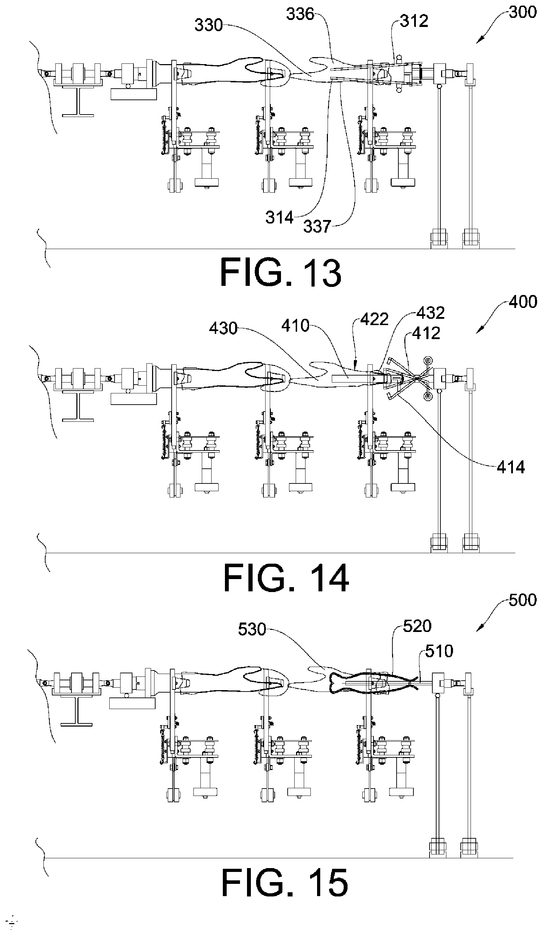

In certain embodiments, as illustrated in FIG. 13, the glove donning device 300 includes mechanical plates 312, 314 rather than mandrel arms. The mechanical plates 312, 314 are generally oriented along horizontal planes, and are controlled by a cam follower bearing 394 and cam surface profile (not shown) to expand away from each other in a vertical direction to engage the palm 336 and back of hand 337 portions of the inverted glove 330. In certain other embodiments, as illustrated in FIG. 14, the glove donning device 400 includes a mandrel member 410 about which the glove 430 is positioned, and includes a scissor-type arrangement of pincher arms 412, 414 that may be controlled to engage opposing portions of the exterior surface 422 of the cuff area 432 of the inverted glove 430 to firmly hold the glove between the pincher arms 412, 414 and the mandrel 410.

In certain other embodiments,, As shown in FIG. 15, the glove donning device 500 includes an inflatable bladder 520 coupled to a mandrel shaft 510. Air, water, or other suitable fluid may be supplied to the interior of the bladder through a lumen in the mandrel shaft 510 to inflate and expand the bladder to engage the interior surface of an inverted glove 530 positioned about the bladder 520. The bladder 520 may be constructed of any suitable material that is flexible, durable, and gas or fluid impervious, such as a flexible polymer, vulcanized rubber, etc.

## Claims

1. A system comprising an online glove stripping and inverting mechanism for stripping and inverting an elastomeric glove (30) from a mold (20) and re-donning the elastomeric glove (30) on a second mechanism for secondary online processing;
wherein the online glove stripping and inverting mechanism comprises
a cuff rolling device (40) for rolling a portion of the cuff (32) of the glove distally away from a mold base (21) and toward the finger (38) and palm (36) areas of the elastomeric glove (30), thereby forming a rolled portion of the cuff and an exposed portion of a surface of the mold (22);
a gripping device having one or more gripping members (86, 88), the gripping device configured to engage the exposed portion of the surface of the mold (22); and,
a roll-back device for unrolling the rolled portion of the cuff proximally toward the mold base (21) and away from the elastomeric glove finger (38) and palm (36) areas thereby forming an unrolled cuff, the roll-back device configured to unroll the rolled portion of the cuff over and onto a portion of the one or more gripping members (86, 88) such that the one or more gripping members are interposed between the mold surface (22) and at least a portion of the unrolled cuff;
wherein the second mechanism comprises a glove donning device (100, 200, 300, 400, 500) comprising a mandrel.

2. The system of claim 1, wherein the mold (20) is a former.

3. The system of claim 1, wherein the glove stripping and inverting mechanism comprises a stripping apparatus.

4. The system of claim 3, wherein the glove stripping and inverting mechanism comprises a glove stripping device (50).

5. The system of claim 4, wherein the glove stripping device comprises a mechanical arm (57, 58).

6. The system of claim 3, wherein the stripping apparatus comprises a lifting device.

7. The system of claim 3, wherein the stripping apparatus comprises an actuation device.

8. The system of claim 1, wherein the mandrel has at least one holding member.

9. The system of claim 1, wherein the system further comprises air nozzles (96).

10. The system of claim 1, wherein the system is configured to move continuously and synchronize with the existing continuous dipping line speed to continuously strip, invert, and mount elastomeric gloves formed by the dip forming process onto glove donning devices (100, 200, 300, 400, 500) for subsequent on-line processing.

11. A method of manufacturing elastomeric articles comprising:
forming an elastomeric glove (30) on the surface of a glove mold (20);
stripping the formed elastomeric glove (30) from the surface of the mold (20),
wherein stripping the formed elastomeric glove from the surface of the mold includes:
rolling down a portion of the cuff (32) of the elastomeric glove formed on a mold, thereby forming a rolled portion of the cuff and an exposed portion of the surface of the mold;
positioning a gripping member (86, 88) on the exposed portion of the surface of the mold (22); and,
unrolling the rolled portion of the cuff thereby forming an unrolled glove cuff, wherein the rolled portion of the cuff is unrolled onto the gripping member such that the gripping member is interposed between the mold surface (22) and at least a portion of the unrolled glove cuff;
inverting the elastomeric glove (30);
mounting the elastomeric glove (30) on a glove donning device (100, 200, 300, 400, 500) including a mandrel (110, 210, 410, 510);
subjecting the elastomeric glove (30) to one or more secondary processes while the elastomeric glove (30) is mounted on the glove donning device (100, 200, 300, 400, 500).

## Patentansprüche

1. System, das einen Online-Handschuh-Abzieh- und Wendemechanismus zum Abziehen und Wenden eines Elastomer-Handschuhs (30) von einer Form (20) und erneuten Aufziehen des Elastomer-Handschuhs (30) auf einen zweiten Mechanismus zur sekundären Online-Verarbeitung umfasst,
wobei der Online-Handschuh-Abzieh- und Wendemechanismus Folgendes umfasst:
eine Manschettenrolleinrichtung (40) zum Rollen eines Abschnitts der Manschette (32) des Handschuhs in Distalrichtung weg von einer Formbasis (21) und hin zu dem Finger- (38) und dem Handflächen- (36) -bereich des Elastomer-Handschuhs (30), wodurch ein gerollter Abschnitt der Manschette und ein freigelegter Abschnitt einer Oberfläche der Form (22) gebildet werden;
eine Greifeinrichtung, die ein oder mehrere Greifelemente (86, 88) aufweist, wobei die Greifeinrichtung dafür konfiguriert ist, den freigelegten Abschnitt der Oberfläche der Form (22) in Eingriff zu nehmen; und
eine Zurückrolleinrichtung zum Abrollen des gerollten Abschnitts der Manschette in Proximalrichtung hin zu der Formbasis (21) und weg von dem Finger- (38) und dem Handflächen- (36) -bereich, wodurch eine abgerollte Manschette gebildet wird, wobei die Zurückrolleinrichtung dafür konfiguriert ist, den gerollten Abschnitt der Manschette derart über und auf einen Abschnitt des einen oder der mehreren Greifelemente (86, 88) abzurollen, dass das eine oder die mehreren Greifelemente zwischen der Formoberfläche (22) und mindestens einem Abschnitt der abgerollten Manschette eingeschoben sind;
wobei der zweite Mechanismus eine Handschuh-Aufzieheinrichtung (100, 200, 300, 400, 500) umfasst, die einen Dorn umfasst.

2. System nach Anspruch 1, wobei die Form (20) ein Former ist.

3. System nach Anspruch 1, wobei der Handschuh-Abzieh- und Wendemechanismus eine Abziehvorrichtung umfasst.

4. System nach Anspruch 3, wobei der Handschuh-Abzieh- und Wendemechanismus eine Handschuh-Abzieheinrichtung (50) umfasst.

5. System nach Anspruch 4, wobei die Handschuh-Abzieheinrichtung einen mechanischen Arm (57, 58) umfasst.

6. System nach Anspruch 3, wobei die Abziehvorrichtung eine Hebeeinrichtung umfasst.

7. System nach Anspruch 3, wobei die Abziehvorrichtung eine Betätigungseinrichtung umfasst.

8. System nach Anspruch 1, wobei der Dorn mindestens ein Halteelement aufweist.

9. System nach Anspruch 1, wobei das System ferner Luftdüsen (96) umfasst.

10. System nach Anspruch 1, wobei das System dafür konfiguriert ist, sich kontinuierlich mit der vorhandenen kontinuierlichen Tauchbandgeschwindigkeit zu bewegen und zu synchronisieren, um kontinuierlich Elastomer-Handschuhe, die durch den Tauchformprozess geformt werden, abzuziehen, zu wenden und zur anschließenden Online-Verarbeitung auf Handschuh-Aufzieheinrichtungen (100, 200, 300, 400, 500) anzubringen.

11. Verfahren zum Fertigen von Elastomer-Artikeln, das Folgendes umfasst:
Formen eines Elastomer-Handschuhs (30) auf der Oberfläche einer Handschuhform (20);
Abziehen des geformten Elastomer-Handschuhs (30) von der Oberfläche der Form (20);
wobei das Abziehen des geformten Elastomer-Handschuhs von der Oberfläche der Form Folgendes einschließt:
Herunterrollen eines Abschnitts der Manschette (32) des auf einer Form geformten Elastomer-Handschuhs, wodurch ein gerollter Abschnitt der Manschette und ein freigelegter Abschnitt der Oberfläche der Form gebildet werden;
Positionieren eines Greifelements (86, 88) an dem freigelegten Abschnitt der Oberfläche der Form (22); und
Abrollen des gerollten Abschnitts der Manschette, wodurch eine abgerollte Handschuhmanschette gebildet wird, wobei der gerollte Abschnitt der Manschette derart auf das Greifelement abgerollt wird, dass das Greifelement zwischen der Formoberfläche (22) und mindestens einem Abschnitt der abgerollten Handschuhmanschette eingeschoben wird,
Wenden des Elastomer-Handschuhs (30);
Anbringen des Elastomer-Handschuhs (30) auf einer Handschuh-Aufzieheinrichtung (100, 200, 300, 400, 500), die einen Dorn (110, 210, 410, 510) einschließt;
Unterwerfen des Elastomer-Handschuhs (30) einem oder mehreren sekundären Prozessen, während der Elastomer-Handschuh (30) auf der Handschuh-Aufzieheinrichtung (100, 200, 300, 400, 500) angebracht ist.

## Revendications

1. Système comprenant un mécanisme de démoulage et d'inversion de gants en ligne pour démouler et inverser un gant élastomère (30) d'un moule (20) et réenfiler le gant élastomère (30) sur un deuxième mécanisme pour un traitement secondaire en ligne;
dans lequel le mécanisme de démoulage et d'inversion de gants en ligne comprend :
un dispositif de roulage de manchette (40) pour rouler une partie de la manchette (32) du gant distalement à l'écart d'une base de moule (21) et vers les zones des doigts (38) et de la paume (36) du gant élastomère (30), formant ainsi une partie roulée de la manchette et une partie exposée d'une surface du moule (22);
un dispositif de préhension comportant un ou plusieurs éléments de préhension (86, 88), le dispositif de préhension étant configuré pour s'engager dans la partie exposée de la surface du moule (22); et,
un dispositif d'enroulement pour dérouler la partie enroulée de la manchette proximalement vers la base de moule (21) et à l'écart des zones des doigts (38) et de la paume (36) du gant élastomère, formant ainsi une manchette déroulée, le dispositif d'enroulement étant configuré pour dérouler la partie enroulée de la manchette au-dessus et sur une partie des un ou plusieurs éléments de préhension (86, 88) de sorte que les un ou plusieurs éléments de préhension soient interposés entre la surface du moule (22) et au moins une partie de la manchette déroulée,
dans lequel le deuxième mécanisme comprend un dispositif d'enfilage de gants (100, 200, 300, 400, 500) comprenant un mandrin.

2. Système selon la revendication 1, dans lequel le moule (20) est une forme.

3. Système selon la revendication 1, dans lequel le mécanisme de démoulage et d'inversion de gants comprend un appareil de démoulage.

4. Système selon la revendication 3, dans lequel le mécanisme de démoulage et d'inversion de gants comprend un dispositif de démoulage de gants (50).

5. Système selon la revendication 4, dans lequel le dispositif de démoulage de gants comprend un bras mécanique (57, 58).

6. Système selon la revendication 3, dans lequel l'appareil de démoulage comprend un dispositif de levage.

7. Système selon la revendication 3, dans lequel l'appareil de démoulage comprend un dispositif d'actionnement.

8. Système selon la revendication 1, dans lequel le mandrin comporte au moins un élément de maintien.

9. Système selon la revendication 1, dans lequel le système comprend en outre des buses d'air (96).

10. Système selon la revendication 1, dans lequel le système est configuré pour se déplacer en continu et se synchroniser avec la vitesse de la ligne de trempage continue existante pour démouler, inverser et monter en continu des gants élastomères formés par le processus de trempage sur des dispositifs d'enfilage de gants (100, 200, 300, 400, 500) en vue d'un traitement en ligne ultérieur.

11. Procédé de fabrication d'articles en élastomère comprenant les étapes consistant à:
former un gant élastomère (30) sur la surface d'un moule (20) à gants;
décoller le gant élastomère (30) formé de la surface du moule (20),
dans lequel le démoulage du gant élastomère formé de la surface du moule inclut les étapes consistant à:
rouler vers le bas une partie de la manchette (32) du gant élastomère formé sur un moule, formant ainsi une partie roulée de la manchette et une partie exposée de la surface du moule,
positionner un élément de préhension (86, 88) sur la partie exposée de la surface du moule (22); et,
dérouler la partie roulée de la manchette pour former une manchette de gant déroulée, dans lequel la partie roulée de la manchette est déroulée sur l'élément de préhension de sorte que l'élément de préhension est interposé entre la surface du moule (22) et au moins une partie de la manchette de gant déroulée;
retourner le gant élastomère (30);
monter le gant élastomère (30) sur un dispositif d'enfilage de gants (100, 200, 300, 400, 500) incluant un mandrin (110, 210, 410, 510);
soumettre le gant élastomère (30) à un ou plusieurs processus secondaires pendant que le gant élastomère (30) est monté sur le dispositif d'enfilage de gants (100, 200, 300, 400, 500).
